# EUROPEAN PATENT APPLICATION

(11) **EP 1 862 942 A1**
(43) Date of publication of application: **05.12.2007**
(21) Application number: 05721177.3
(22) Date of filing: 18.03.2005
(51) Int. Cl.: G06K 19/00

(54) **INFORMATION MEDIUM HAVING DISPLAY FUNCTION**

(71) Applicant: Fujitsu Ltd., Kawasaki-shi, Kanagawa 211-8588 (JP)
(72) Inventor: NOSE, Masaki, c/o FUJITSU LIMITED, Kawasaki-shi, Kanagawa 2118588 (JP); SHINGAI, Tomohisa, c/o FUJITSU LIMITED, Kawasaki-shi, Kanagawa 2118588 (JP)
(74) Representative: Fenlon, Christine Lesley
(86) International application number: PCT/JP2005/005027
(87) International publication number: WO 2006/100743

(57) **Abstract**

To realize a display driver chip for an information medium having a display function adaptable to any information medium chip, the information medium having a display function includes first communication means for transmitting and receiving information to and from a reader/writer in a contactless manner, second communication means having a communication interface that is the same as that of the first communication means and receiving information from the reader/writer independently of the first communication means, and display means for displaying information received from the reader/writer by the second communication means. Thus, it is possible to mount a memory display panel without modifying the configuration of the information medium chip such as a conventional IC card chip and the same display driver chip can be used for any information medium chip.

## Description

### Technical Field

The present invention relates to an information medium such as a contactless IC card, an RFID tag or the like that transmits and receives information to and from a reader/writer device in a contactless manner, and particularly to an information medium that has a display unit and performs transmission and reception of data to and from a reader/writer device in a contactless manner.

### Background Art

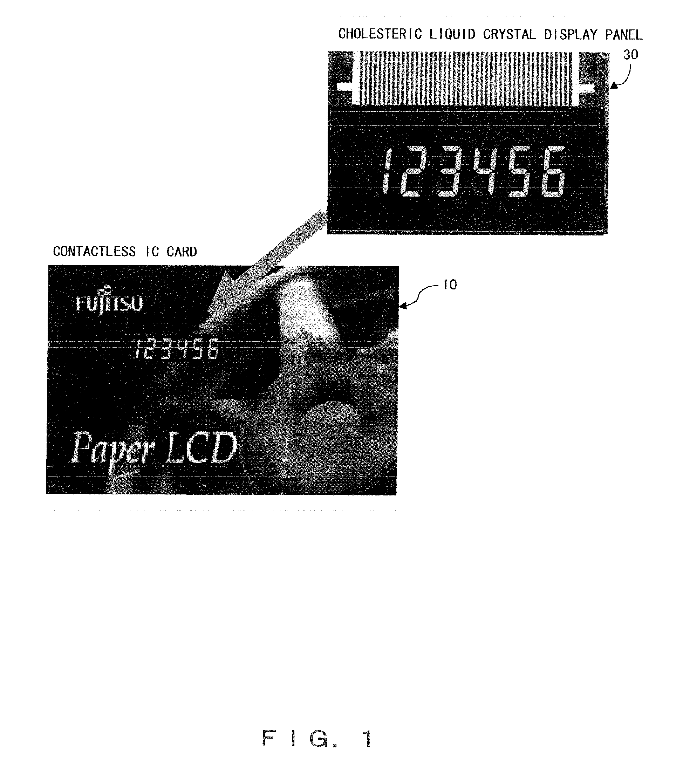

Information media that transmit and receive data to and from reader/writer devices in a contactless manner have rapidly become common in recent years. Information media such as contactless IC cards and the like that transmit and receive data to and from reader/writer devices have not allowed the printing and displaying of information such as the remaining balance of pre-paid cards, incentive points given when shopping, or the like by using reader/writer devices. In order to solve this problem, a contactless IC card 10 is suggested that includes an image memory display panel 30 that can maintain a display state even when a power supply stops (for example, a cholesteric liquid crystal display panel of a selective reflection type that uses liquid crystals forming a cholesteric phase) as shown in Fig. 1. This contactless IC card 10 allows the displaying of information such as the remaining balance on a pre-paid card, incentive points, or the like by employing a configuration in which a signal line and a power supply line that extend from the contactless IC card chip are connected to the display driver chip of the semipermanent memory display panel 30.

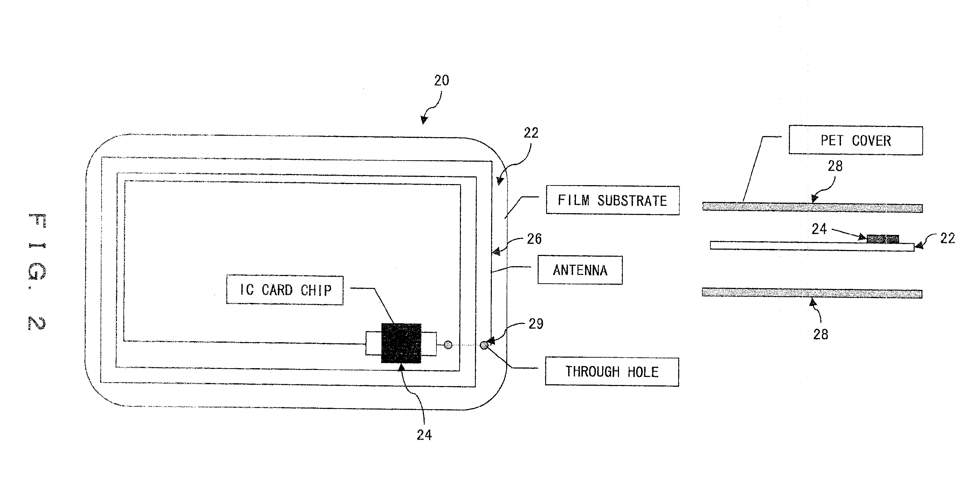

Fig. 2 shows a configuration of a commonly used contactless IC card. 20 that does not have a display function. The contactless IC card 20 employs a configuration in which, for example, an IC card chip 24 is mounted on a film substrate 22, a loop antenna 26 forms a plurality of loops on the film substrate 22 and around the IC card chip 24, the end of the film substrate 22 is connected to the IC card chip 24 via a through hole 29, and the bottom surface of the contactless IC card 20 is covered entirely by a PET cover 28.

The contactless IC card 20 performs communications, via the loop antenna 26 included in the contactless IC card 20 itself, with a computer having a reader/writer connected. It requires no signal line except for the loop antenna 26.

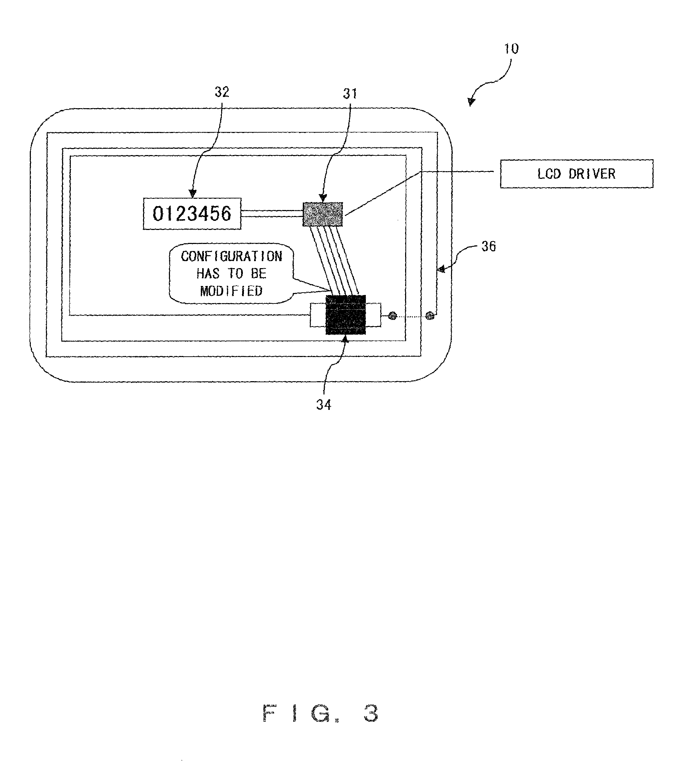

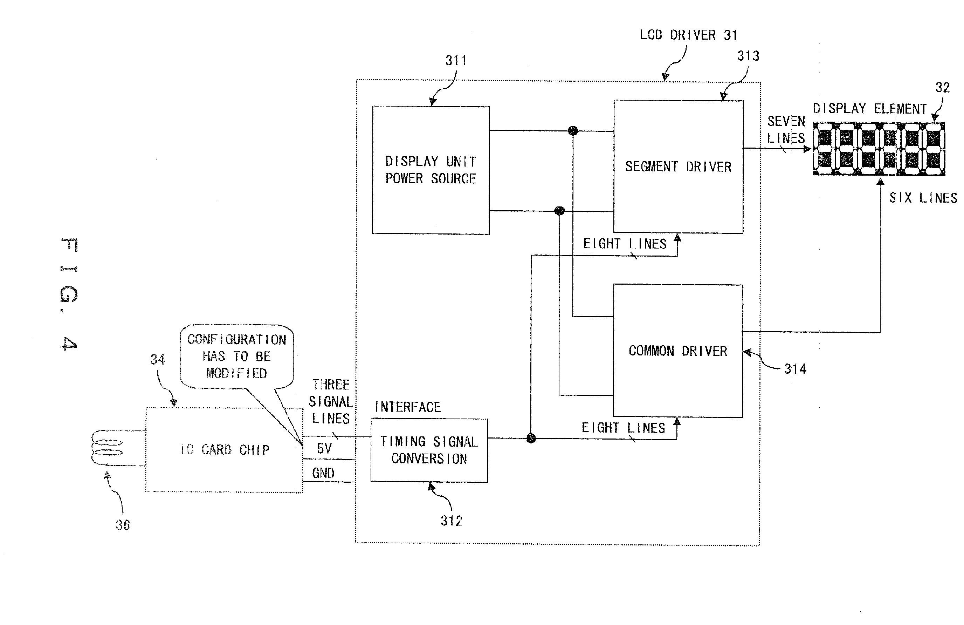

Accordingly, when an image memory display panel is to be included in a contactless IC card, it has been necessary to modify the configuration of the contactless IC card chip 34 in such a manner that the chip includes signal lines and a power supply line, as shown in Figs. 3 and 4.

Hereinafter, the contactless IC card 10 that is of a conventional type and that includes the image display panel 30 is explained by referring to Figs. 3 and 4.

The image memory display panel 30 shown in Fig. 1, which are not shown in Fig. 3or Fig.4, comprises a display element 32 and an LCD driver 31. The LCD driver 31 comprises a segment driver 313 for driving segments in the display element 32, a common driver 314 for driving a common electrode in the display element, an interface 312 for controlling the segment driver 313 and the common driver 314 by converting signals in accordance with the timings at which the signals from the IC card chip 34 are recieved, and a display unit power source 311 for supplying driving power to the segment driver 313 and the common driver 314 on the basis of the power supplied from the IC card chip.

The configuration of the IC card chip 34 has to be modified such that signal lines and power supply lines extend from the IC card chip 34 in order to supply, to the image memory display panel 30 through the interface 312, the power and data acquired via a loop antenna 36.

In the case of, for example, a TYFE-B card used as a Basic Resident Register card in Japan, the IC card chip is an LSI including a 32-bit CPU, and it is very costly to modify the configurations of such devices. This high cost of modifying configurations of IC cards is the greatest factor preventing the spread of the use of IC cards having a display function. Also, because there are a plurality of combinations of levels of power voltages and signals of IC card chips, a plurality of types of display drivers are required.

As an example of a device having the above described configuration, Patent Document 1 discloses an electronic medium such as an RFID tag that includes a display unit and a contactless communication unit for receiving a supply of power and transmitting and receiving digital information. In this electronic medium too, the display unit is driven by the contactless communication unit.

Patent Documents 2 and 3 disclose methods of realizing a image memory display by using a contactless IC card that has a configuration different than the above.

Patent document 2 discloses a technique of driving a display unit by receivingmeans for incident light that expresses information in addition to a conventional contactless communication means. The method disclosed in Patent Document 2 does not require a configuration modification in a contactless communication means. However, this method requires a configuration modification in a reader/writer.

Patent Document 3 discloses a technique of displaying information using heat by external electromagnetic waves used for communications with conventional contactless communication units. Accordingly, the displayed contents are greatly limited. Also, because the heat is generated by external electromagnetic waves, there is a probability that some information will be displayed from electromagnetic waces emitted from devices that are not the proper reader/writer.
Patent Document 1: Japanese Published Patent Application No. 2004-102840
Patent Document 2: Japanese Published Patent Application No. 2004-127279
Patent Document 3: Japanese Published Patent Application No. H07-68978

### Disclosure of the Invention

It is an object of the present invention to provide a display module as an open resource applicable to any type of information media transmitting and receiving, in a contactless manner, information to and from a reader/writer.

In order to achieve this object, an information medium having a display function according to the present invention comprises first communication means transmitting and receiving information to and from a reader/writer device in a contactless manner, second communication means having a communication interface that is the same as that of the first communication means and receiving information from the reader/writer in a contactless manner and independently from the first communication means, and display means displaying information received from the reader/writer via the second communication means.

According to the present invention, an image memory display panel can be mounted on an information medium without modifying the configuration of a chip for the information medium, the chip being a conventional IC card chip or the like. Also, the same display control chip can be used also for a chip that is used in an information medium.

### Brief Description of the Drawings

Fig. 1 shows the appearance of a conventional contactless IC card having a display function;
Fig. 2 shows a configuration of a commonly used contactless IC card without a display function;
Fig. 3 shows a configuration of a conventional contactless IC card having a display function;
Fig. 4 is a block diagram of the conventional contactless IC card having a display function;

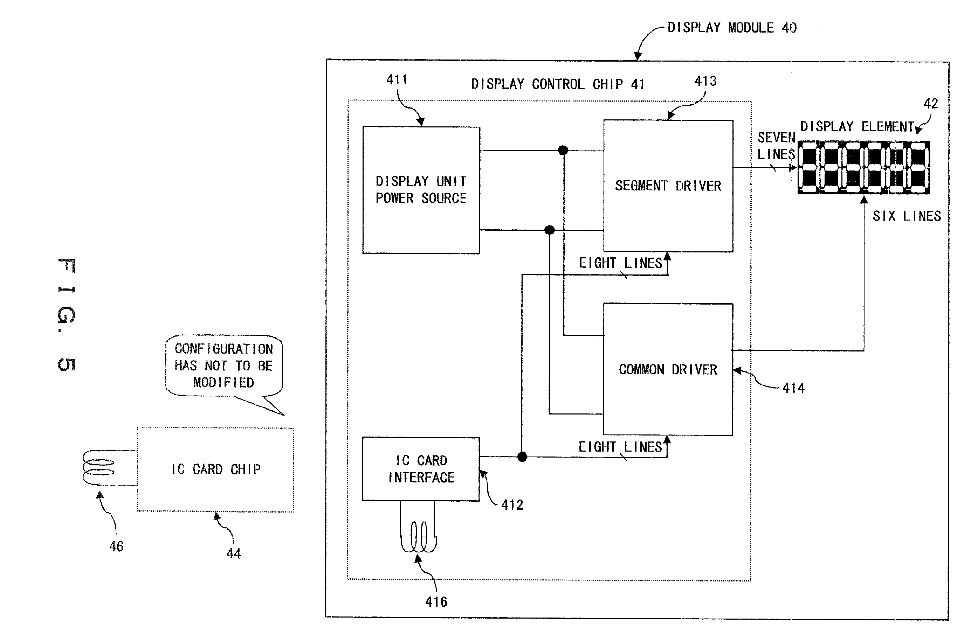

Fig. 5 is a block diagram of a contactless IC card having a display function according to the present invention;

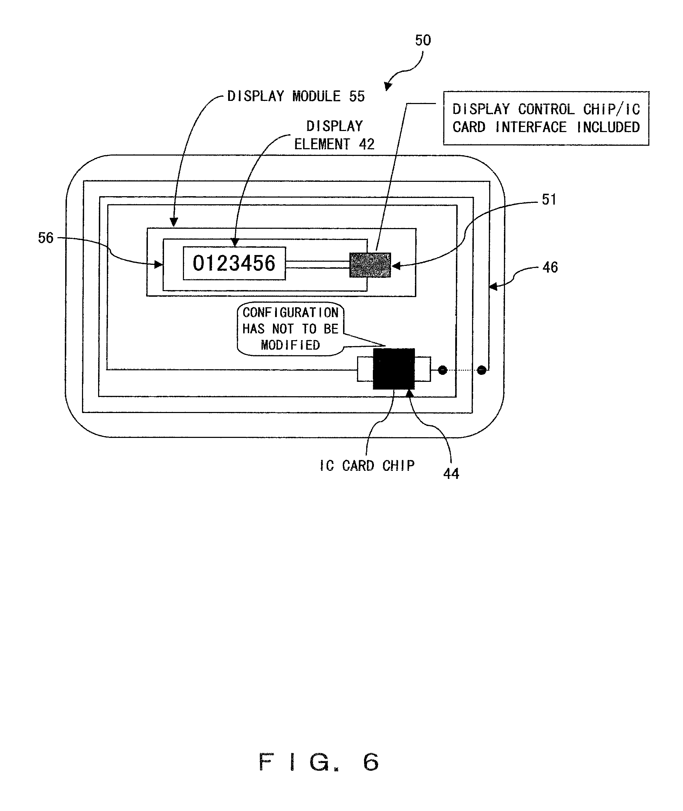

Fig. 6 shows a configuration of the contactless IC card having a display function according to the present invention;

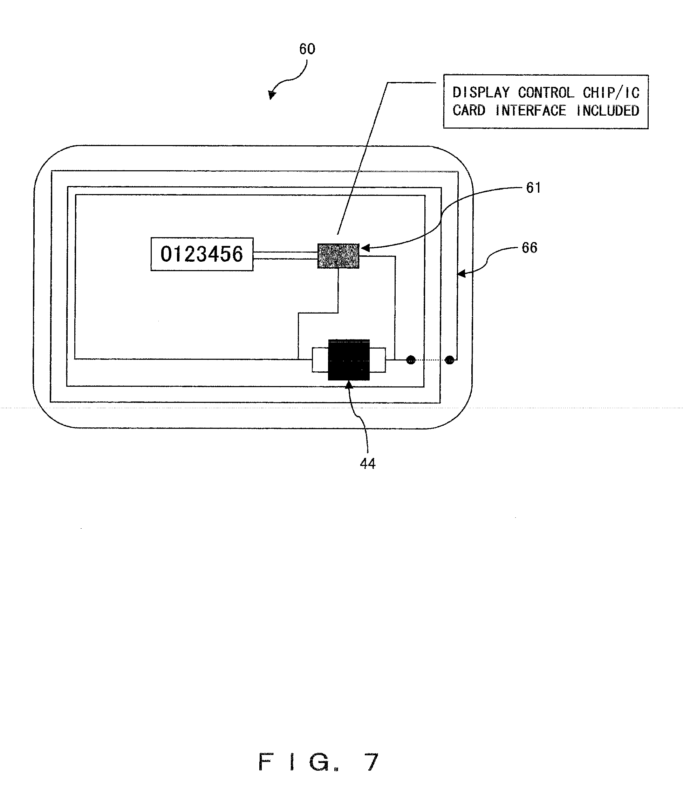

Fig. 7 is a block diagram of a contactless IC card having a display function whose RFID chip and display control chip have an antenna in common that they both use;

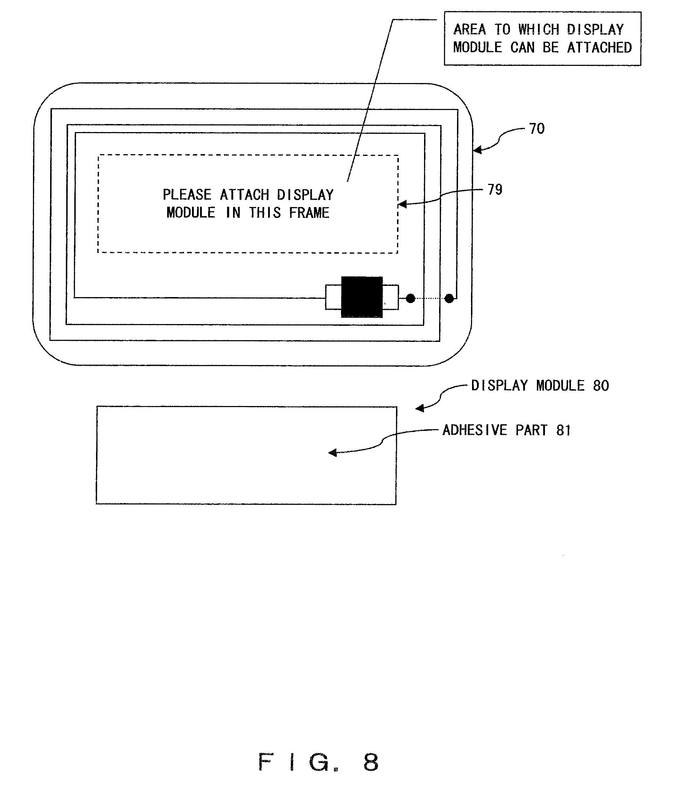

Fig. 8 shows an embodiment of the present invention in which a display module is attached to a contactless IC card so that the card can be used as a contactless IC card having a display function;

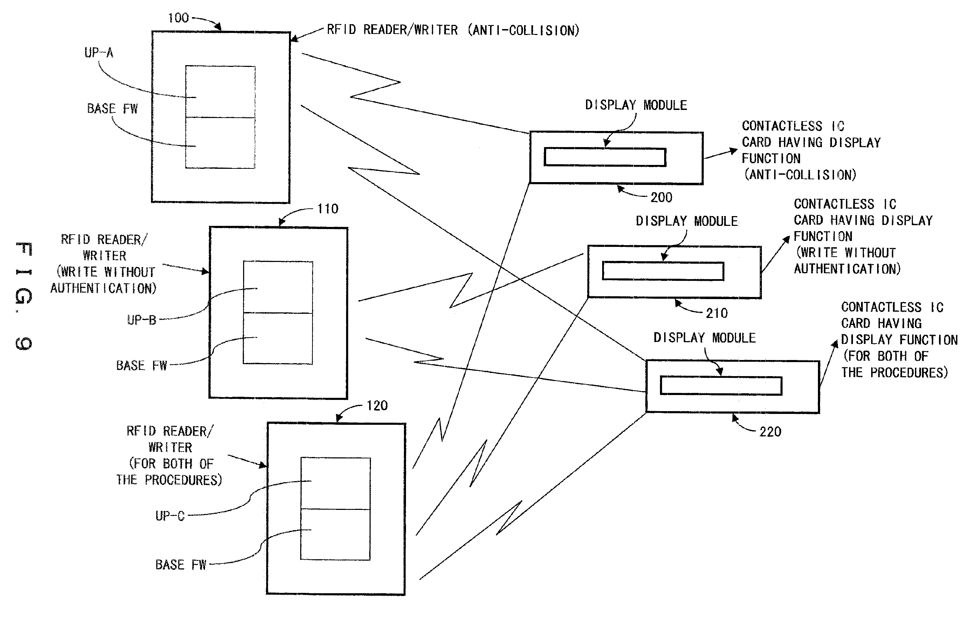

Fig. 9 shows communication feasibility relationship between the contactless IC card having a display function according to the present invention and an RFID reader/writer corresponding to their communication protocol; and

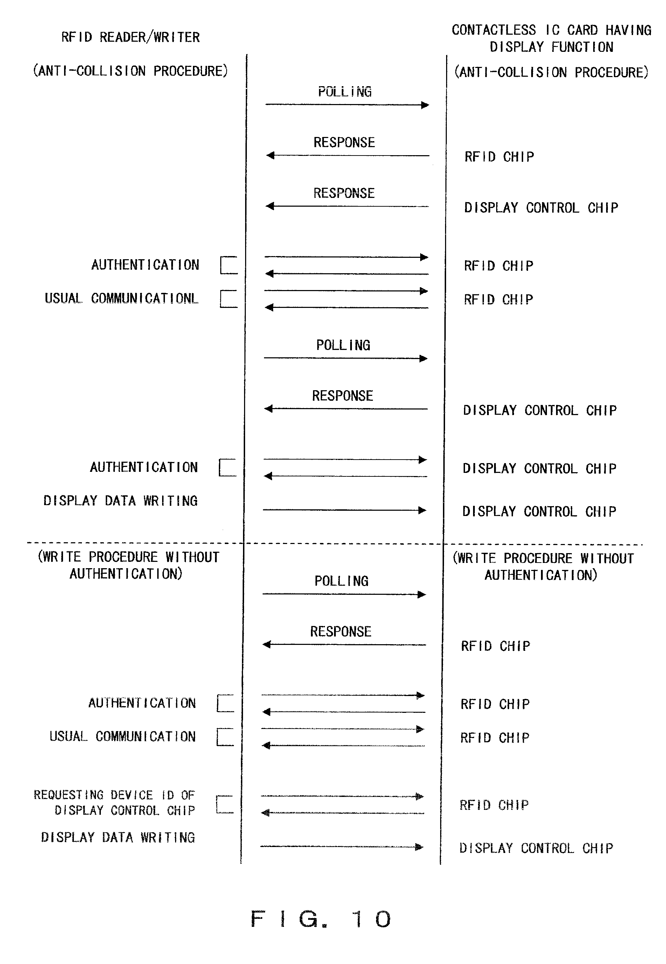

Fig. 10 shows process sequences between the contactless IC card having a display function and an RFID reader/writer in their respective communication procedures.

### Best Modes for Carrying Out the Invention

Hereinafter, embodiments of the present invention will be explained by using, as an example of a contactless information medium, a contactless IC card including an RFID chip as an IC card chip.

First, the principle and a first embodiment of the present invention will be explained by referring to Figs. 5 through 7.

As shown in Fig. 5, a display control chip 41 according to the present invention comprises an 1C card interface 412 to which an antenna 416 is connected in order to realize transmission and reception of signals to and from IC card reader/writers via the same communication interface as that of an IC card chip 44, which is different from the conventional LCD driver 31 shown in Fig. 4. Accordingly, it is not necessary to modify the configuration of the IC card chip, and the IC card chip 44 shown in Fig. 5 can be the same as the IC card chip 24 shown in Fig. 2 because it is possible to receive display data directly from a reader/writer. Also, a display unit power source 411 for a display element 42 and a display control chip 41 constituting a display module 40, a segment driver 413, and a common driver 414 can be the same as a conventional display unit power source 311, segment driver 313, and common driver 314 shown in Fig. 4. The antenna for the display control chip can be a type embedded in a display control chip 41 similarly to the antenna 416 shown in Fig. 5. By embedding the antenna on chip, manufacturing costs can be reduced. The IC card interface 412 comprises a logic power source circuit ("5V" in Fig. 4 corresponds to this circuit) that is not shown in any figure, and the power is supplied to the respective units in the display control chip 41. By using this power, the display unit power source 411 generates driving power for the display element 42.

A contactless IC card 50 having the display function shown in Fig. 6 is an embodiment variation for the antenna in the first embodiment. In this embodiment variation, an antenna 56 for the display control chip 51 is not embedded in the display control chip 51, and is disposed on a portion of a display module 55 that is outside of the display control chip 51. The antenna 56 is disposed outside of the display control chip, and accordingly a degree of freedom in designing the display control chip increases.

Fig. 7 shows a contactless IC card 60 having a display function as another embodiment variation for the antenna in the first embodiment. A single antenna 66 is used for both an IC card chip 44 and a display control chip 61. By using a single antenna for both chips, the manufacturing coses can be reduced.

The antennas 46 and 66 for the IC card chip 44 have to be redesigned while taking into consideration the changes in the resonance frequencies because the display module according to the present invention is mounted on a conventional contactless IC card.

However, because a manufacturing tolerance of about 5% in the resonant frequency for a conventional contactless IC card is accepted, it is not necessary to modify the configuration of the antenna for the IC card chip if changes in the resonance frequencies occurring when the display module is mounted are kept within this tolerance.

Next, a second embodiment of the present invention will be explained; in this embodiment, it is not necessary to modify the configuration of a conventional antenna for an IC card chip.

First, conditions are explained that are required for a display module to suppress the resonance frequency change to within 5% when the display module according to the present invention is mounted on a conventional contactless IC card.

According to the analysis based on electromagnetics, the resonance frequency change that results when a display module is mounted depends upon the ratio of load current in an antenna used for a display module to load current in an antenna used for an IC card chip. When the resonance frequency of a conventional contactless IC card is 13.56MHz and 95% (i.e., within 5%) of the frequency change occurs when a display module is mounted, it is sufficient if the load current for the display module is equal to or lower than 5.4% of the load current in the antenna for the IC card chip, i.e., equal to or lower than 10.8% of the electric power.

Because the power consumption in a typical RFID chip is 5mW, the upper limit of the power consumption in the display module is 0.54mW, and this value is sufficiently feasible.

Accordingly, by limiting the upper limit value of the power consumption in the display module, it is possible to realize the second embodiment of the present invention, in which the configuration of an antenna for an RFID chip does not have to be modified, while employing any of the arrangements of an antenna shown in Figs. 5 through 7. Also, as a configuration in the second embodiment of the present invention, any of the configurations shown in Figs. 5 through 7 can obviously be employed as long as the limitation on the power consumption of the display module does not prevent it.

Next, a third embodiment of the present invention is explained; in this embodiment, it is not necessary to modify the configuration of a conventional contactless IC card itself.

According to the present invention, because it is not necessary to connect a conventional IC card chip and a display control chip with a signal line or a power line, a display module having a display element, a display control chip, and an antenna is held in a state such that the display module closely contacts a contactless IC card, and accordingly it is possible to realize a contactless IC card having a display function without modifying the configuration of a conventional contactless IC card.

As it is shown in fig. 8, the mechanism by which a contactless IC card holds a display module is achieved by, for example, providing an adhesive part 81 on a rear face of a display module 80 such that the display module 80 is attached to a contactless IC card 70. In this case, it is desirable that an area 79 to which a display module can be attached be indicated as shown in, for example, Fig. 8. Also, in order to achieve stable operations, it is desirable that the resonant frequency of the entirety including the display module 80 and the contactless IC card 70 in a closely contacting state be equal to or higher than 95% of the resonant frequency of the contactless IC card 70 alone.

Finally, a communication procedure executed for communications between a contactless 1C card having a display function according to the present invention and an RFID reader/writer will be explained.

A standard is defined for a communication procedure between RF reader/writers and conventional contactless IC cards including RFID chips, and in the standard, an anti-collision procedure for authenticating IC cards, preventing collisions among a plurality of IC cards, and realizing operations of the plurality of IC cards at one moment is defined.

Accordingly, transmission and reception of signals are realized between a reader/writer and contactless IC cards in the following manner. First, the reader/writer recognizes and detects a main RFID chip by performing polling on the basis of the anti-collision procedure, and per form usual communications. Next, the reader/writer detects the display control chip by performing polling, and transmits data to be displayed. The display control chip receives the data to be displayed, and displays the data on the image memory display panel.

However, performing the anti-collision procedure takes much time; accordingly, it is also possible to employ a write procedure without authentication instead of the anti-collision procedure for the communications in which display data is only transmitted to the display control chip.

Fig. 9 shows relationships in which communications are possible between RFID reader writers and the contactless IC cards having a display function corresponding to the respective procedures. The process performed by the RFID reader/writer according to the present invention includes processes performed by firmware (base FW) and processes performed by user application programs (UP-A, UP-B, and UP-C) corresponding to the respective procedures. Both the RFID reader/writer and the IC card having a display function can be adapted to the anti-collision procedure and the write procedure without authentication.

Accordingly, there are three types respectively of the RFID reader/writer and the contactless IC card having a display function, and the combinations that allow communications are shown in Fig. 9. A contactless IC card 20C having a display function that adopts the anti-collision procedure can perform communications with an RFID reader/writer 100 that adopts the anti-collision procedure and with an RFID reader/writer 120 that adopts both of the procedures. A contactless IC card 210 having a display function that adopts the write procedure without authentication can perform communications with an RFID reader/writer 110 that adopts the write procedure without authentication and with the RFID reader writer 120 that adopts both of the procedures. A contactless IC card 220 having a display function that adopts both of the procedures can perform communications with three types of RFID reader/writers 100, 110, and 120.

Fig. 10 shows process sequences in the respective procedures.

First, the case is explained in which the RFID reader/writer adopts the anti-collision procedure and the contactless IC card having a display function adopts the anti-collision procedure.

The RFID chip and the display control chip respectively return responses in response to the polling of the RFID reader/writer. The RFID reader/writer selects one partner (in this case, the RFID chip) by applying the anti-collision procedure in response to these responses, and authenticates the RFID chip. When the authentication is terminated, a normal communication is performed in accordance with the application. Thereafter, the polling is again performed, and the display control chip is authenticated in response to the response from the display control chip. When the authentication succeeds, display data is written to the display control chip by using the device ID of the display control chip that was acquired upon the authentication. The display control chip displays the display data on the display element.

Next, the case is explained in which the RFID reader/writer adopts the write procedure without authentication and the contactless IC card having a display function adopts the write procedure without authentication.

In this case, only the RFID chip makes responses to the polling of the RFID reader/writer, and a normal communication is performed with the RFID chip after the authentication procedure. After this communication, the RFID reader/writer makes a requests for the device ID of the display control chip from the RFID chip. The RFID chip holds the device ID of the display control chip, and the device ID is transmitted to the RFID reader /writer. The RFID reader/writer attaches the device ID to the write data and transmits the data to the display control chip. Additionally, the device ID of the display control chip can be calculated from the device ID of the RFID chip acquired upon authentication of the RFID chip when the device ID of the display control chip is in a particular relationship with the device ID of the RFID chip to which the display control chip corresponds.

Next, the case is explained in which the RFID reader/writer can communicate with both the card of the anti-collision procedure and the card of the write procedure without authentication. The process sequence that is the same as that for the above combination between the anti-collision procedures is performed on the card of the anti-collision procedure because the display control chip responds to the polling. The display data is written to the card of the write procedure without authentication in accordance with the write procedure without authentication after recognizing the card to be a card of the write procedure without authentication on the basis of the fact that there is no response from the display control chip.

Next, the case is explained in which the contactless IC card having a display function can communicate with both the RFID reader/writer of the anti-collision procedure and the RFID reader/writer of the write procedure without authentication. In the case in which the RFID reader/writer can communicate with the card of the anti-collision procedure or can communicate with both the card of the anti-collision procedure and the card of the write procedure without authentication, the display control chip responds to polling; accordingly, the process sequence is the same as that for the above combination of anti-collision procedures. When the RFID reader/writer can communicate only with the card of the write procedure without authentication, polling to the display control chip is not performed, and the process proceeds in accordance with the write procedure without authentication.

In the above, the present invention has been explained by using a contactless IC card as an example of an information medium. However, it is obvious that the form of the information media used in the present invention is not limited to a card.

Also, as is obvious from the above explanations, according to a characteristic of the present invention, it is possible to add a display function to a core portion of a conventional information medium without modifying its configuration. Also, according to another characteristic of the present invention, it is possible to eliminate the necessity for modifying the configuration of an antenna of conventional information media. Further, according to still another characteristic of the present invention, it is possible to add a display function without modifying a configuration of a conventional information medium itself.

Further, display data that is transmitted to the display module from the reader/writer is not limited to results of processing in the reader/writer (such as remaining balance or the like), and it is also possible to transmit to the display module of the information medium via the reader/writer data that was processed on the information medium itself, in order to display this data.

## Claims

1. An information medium having a display function, comprising:
first communication means transmitting and receiving information to and from a reader/writer device in a contactless manner;
second communication means having a communication interface that is the same as that of the first communication means and receiving information from the reader/writer in a contactless manner and independently from the first communication means; and
display means displaying information received from the reader/writer via the second communication means.

2. An information medium having an RFID chip, the information medium comprising:
a display module including a memory display element and a display control chip, wherein:
the display module comprises a function of transmitting and receiving a signal to and from an RFID reader/writer through a communication interface that is the same as that of the RFID chip.

3. The information medium according to claim 2, wherein:
the display control chip includes a power source circuit.

4. The information medium according to claim 2, wherein:
the RFID chip and the display control chip have an antenna in common.

5. The information medium according to claim 2, wherein:
the RFID chip and the display control chip respectively comprise dedicated antennas.

6. The information medium according to claim 5, wherein:
the dedicated antenna for the display control chip is included in the display control module.

7. The information medium according to claim 6, wherein:
the dedicated antenna for the display control chip is included in the display control chip.

8. An information medium having an RFID chip and an antenna for the RFID chip and transmitting and receiving a signal to and from an RFID reader/writer in a contactless manner via the antenna for the RFID chip, comprising:
a display module including a memory display element and a display control chip, wherein:
the display module has a function of transmitting and receiving a signal to and from an RFID reader/writer in a contactless manner via an antenna for the display module through a communication interface that is the same as that of the RFID chip; and
a resonance frequency of a system having the RFID chip, the antenna for the RFID chip, the display module, and the antenna for the display module is made to be within a manufacturing tolerance range of an allowable resonance frequency for a situation in which a system having the RFID chip and the antenna for the RFID chip has communications with the RFID reader/writer.

9. The information medium according to claim 8, wherein:
the antenna for the RFID chip and the antenna for the display module are dedicated antennas respectively for the RFID chip and the display module.

10. The information medium according to claim 8, wherein:
a single antenna is used as both the antenna for the RFID chip and the antenna for the display module.

11. An information medium having an RFID chip, wherein:
a display module having a memory display element and a display control chip and having a function of transmitting and receiving a signal to and from an RFID reader/writer through a communication interface that is the same as that of the RFID chip is held in a closely contacting state with respect to the information medium.

12. The information medium according to claim 11, wherein:
an antenna for the display module is included in the display control chip.

13. The information medium according to claim 11, wherein:
a resonance frequency of an entirety in a state in which the display module is closely contacting is equal to or higher than 95% of a resonance frequency of the information medium alone.

14. The information medium according to claim 11, comprising:
an adhesive part on one surface of the display module.

15. The information medium according to claim 11, wherein:
an area on which the display module can be held is displayed on a surface of the information medium.

16. The information medium according to claim 2 or 11, wherein:
the display control chip has a function of transmitting and receiving a signal to and from the RFID reader/writer and a function of authentication, and an anti-collision procedure is used for discrimination of the display control chip and the RFID chip.

17. The information medium according to claim 2 or 11, wherein:
the display control chip has a function of receiving a signal from the RFID reader/writer, and a write procedure without authentication is used for transmission of data to the display control chip.

18. The information medium according to claim 17, wherein:
a device ID of the display control chip is stored in the RFID chip.

19. The information medium according to claim 17, wherein:
a device TD of the display control chip is in a, particular relationship with a device 1D of the RFID chip.

20. The information medium according to claim 2 or 11, wherein:
an anti-collision procedure is used for a communication with an RFID reader/writer that uses an anti-collision procedure, and a write procedure without authentication is used for a communication with an RFID reader/writer that uses a write procedure without authentication.

21. A display module having a memory display element and a display control chip, comprising:
a function of transmitting and receiving a signal to and from an RFID reader/writer through a communication interface that is the same as that of an RFID chip.

22. The display module according to claim 21, wherein:
a resonance frequency of an entirety in a closely contacting state with respect to an information medium having an RFID chip is equal to or higher than 95% of a resonance frequency of the information medium alone.

23. The display module according to claim 21, comprising :
an adhesive part on a surface opposite to a display surface of the memory display element.

24. An RFID reader/writer having an RFID chip and a display module comprising a memory display element and a display control chip, the display control chip having a communication interface that is the same as that of the RFID chip and transmitting and receiving signals to and from an information medium having an authentication function, wherein:
the RFID reader/writer uses an anti-collision procedure for discriminating the RFID chip and the display control chip.

25. An RFID reader/writer comprising an RFID chip and a display module comprising a memory display element and a display control chip, the display control chip transmitting and receiving a signal to and from an information medium having a communication interface that is the same as that of the RFID chip, wherein:
the RFID reader/writer uses a write procedure without authentication for transmitting data to the display control chip.

26. The RFID reader/writer according to claim 25, wherein:
the RFID reader/writer requests the RFID chip to acquire a device ID of the display control chip, and uses the device ID when transmitting the data.

27. The RFID reader/writer according to claim 25, wherein:
the RFID reader/writer calculates the device ID of the display control chip on the basis of a device ID of the RFID chip acquired when authenticating the RFID chip.

28. An RFID reader/writer having an RFID chip and a display module including a memory display element and a display control chip, the display control chip transmitting and receiving a signal to and from an information medium having a communication interface that is the same as that of the RFID chip, wherein:
the RFID reader/writer uses an anti-collision procedure when the display control chip has an authentication function, and uses a write procedure without authentication for transmitting data to the display control chip when the display control chip does not have an authentication function.
